# EUROPEAN PATENT APPLICATION

(11) **EP 2 798 990 A1**
(43) Date of publication of application: **05.11.2014**
(21) Application number: 13183236.2
(22) Date of filing: 05.09.2013
(51) Int. Cl.: A47J 39/00

(54) **Mobile service cart with closed circulation system**

(30) Priority: 02.05.2013 US 201313875984
(71) Applicant: Cambro Manufacturing Company, Huntington Beach CA 92647-2056 (US)
(72) Inventor: Jarvis, Charles W., Irvine, California 92714 (US); Nicholson, Jeff, Long Beach, California 90808 (US); Freeman, Ernest F., Rancho Santa Margarita, California 92688 (US); Brattoli, Pietro, 72654 Neckartenzlingen (DE)
(74) Representative: Alves Moreira, Pedro

(57) **Abstract**

An improved refrigeration and heating system comprising a thermochemical device, and a mobile service cart. The thermochemical device is capable of refrigerating or cooling the ambient air due to an internal chemical process. This same chemical process also produces a significant amount of heat as a by-product which, if left alone, would normally be vented or released in to the atmosphere and become lost. However because the theremochemical device is disposed at the center of the cart, the heat which is generated by the cooling process is retained and utilized to provide a separate heating area within the cart. This allows the current system to operate as a closed loop, meaning that the cart and thermochemical device work in conjunction to form a self-sustaining hot and cold storage area with very little maintenance or input from a user.

## Description

### Background

### Field of the Technology

The disclosure relates to the field of food service carts, specifically food service carts that comprise a closed system for keeping food stuffs at two separate temperatures.

### Description of the Prior Art

Mobile food service carts have long been used to transport and serve food items in a variety of locations such as hospitals, schools, and the like. Typically, these carts comprise a large cabinet space with wheels that allow them to be easily maneuvered around.

Further developments brought mobile service carts that comprised heating elements, refrigeration means, or both. Many of these designs used a forced convection heater which forced warm air to one side of the cart, thereby making one portion of the cart warmer than the remaining portion. Specifically outside air is brought in from the outside environment which is heated by an electric heating element. The heated air is then blown by a fan or other device to a portion of the cart designated as the warm or hot portion. Conversely, the fan may be used to remove heated air from a portion of the cart which in turn keeps that portion relatively cool. In order to maintain sufficiently low temperatures for food storage however, a separate refrigeration system or unit must typically also be used, thus requiring a larger or separate power source from that of the heating unit.

Other advancements have included the use of thermochemical units which use the repeatable exothermic and endothermic reactions of a gas to produce heat and cool the surrounding environment, respectively. These systems typically need an inlet flow and an outlet flow for air, rendering them highly inefficient and restricting their use to areas where air flow is unencumbered.

What is needed is an improved system utilizing a closed loop or closed system that uses the waste product produced by the means for refrigerating food stuffs at a sufficiently cold temperature as the means for heating food stuffs at a high temperature. The means for refrigeration and heating should preferably be contained within a single unit or cart, the cart being highly mobile, efficient, and be capable of insulating a single serving tray into two separate temperature zones.

### Brief Summary

The invention includes a mobile system for storing and maintaining food stuffs at a first temperature and at a second temperature. The mobile system includes a cart with a front hemisphere and a rear hemisphere and a thermochemical device disposed within the cart. The thermochemical device is evenly distributed between the front and rear hemispheres of the cart which retains most of the heat produced by the thermochemical device within the cart.

In one embodiment, the front hemisphere and the rear hemisphere of the cart each have two thermally insulated halves separated by a tray rack. The tray rack includes a tray arm, a plurality of tray partitions coupled to the tray arm in a vertical configuration, and a gasket disposed between each of the vertically configured tray partitions. Each gasket within the tray rack is made of two seals coupled to a top tray partition and two seals coupled to another tray partitions located directly beneath the top tray partition.

In another embodiment, the thermochemical device includes a hot module and a cold module. The hot module maintains thermal contact with one of the thermally insulated halves of each hemisphere, while the cold module maintains thermal contact with the remaining thermally insulated half in each hemisphere, thus providing each hemisphere with a hot and cold portion that are thermally insulated from one another.

In one particular embodiment, the thermally insulated halves of the hemispheres in thermal contact with the hot module and cold module are diametrically opposed to one another, respectively.

In yet another embodiment, the system also includes means for forming a closed loop flow of air through the hot module and through the insulated halves of the hemispheres in thermal contact with the hot module.

Similarly in a related embodiment, the system further includes means for forming a closed loop flow of air through the cold module and the insulated halves of the hemispheres in thermal contact with the cold module.

In a separate embodiment, the system also has means for recharging the thermochemical device disposed in the cart.

The invention also includes a method for storing and maintaining food stuffs at a first temperature and a second temperature. The method includes cooling a first longitudinal half of a cart with a first closed loop of air flow, heating a second longitudinal half of the cart with a second closed loop of air flow while thermally insulating the first and second longitudinal halves of the cart from each other. A plurality of trays are disposed in the cart and are thermally insulated into a first portion and a second portion.

In one embodiment, cooling of the first longitudinal half of the cart with a first closed loop of air flow includes passing the air flow over a means for performing an endothermic reaction disposed in the first longitudinal half of the cart. Similarly, heating of the second longitudinal half of the cart with a second closed loop of air flow comprises passing the air flow over a means for containing an exothermic reaction produced by the waste product produced by the means for performing the endothermic reaction disposed in the first longitudinal half of the cart.

In one embodiment, the method step of disposing a plurality of trays into the cart includes disposing the plurality of trays into in a tray rack, wherein the tray rack is disposed between the first and second longitudinal halves of the cart. Thermally insulating the first portion of each of the plurality of trays from a second portion of each of the plurality of trays is done by separating each tray into first and second portions by inserting each tray into a gasket defined in the tray rack.

In another embodiment, the method further includes recharging a thermochemical device disposed in the cart.

The invention further includes a method for operating a system that stores and maintains food stuffs at a first temperature and a second temperature. The method includes activating a thermochemical device disposed within a cart, operating the thermochemical device according to a predetermined set of programmable instructions, deactivating the thermochemical device, and then recharging the thermochemical device.

In one embodiment, the method of step of operating the thermochemical device according to a predetermined set of programmable instructions includes operating the thermochemical device for a predetermined amount of time. Alternatively, the predetermined set of programmable instructions includes operating the thermochemical device until a chemical supply contained within the thermochemical device has been depleted.

In another embodiment, the method also includes detecting when one or more doors disposed on the cart are in the open position.

In another related embodiment, the method further includes activating an alarm when a defect has been detected in the thermochemical device or for when the doors disposed on the cart have been detected in the open position.

While the apparatus and method has or will be described for the sake of grammatical fluidity with functional explanations, it is to be expressly understood that the claims, unless expressly formulated under 35 USC 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 USC 112 are to be accorded full statutory equivalents under 35 USC 112. The disclosure can be better visualized by turning now to the following drawings wherein like elements are referenced by like numerals.

### Brief Description of the Drawings

Fig. 1 is a perspective view of the outside of the system with the doors of the cart closed.
Fig. 2 is a perspective view of the cart portion of the system seen in Fig. 1 with the front hemisphere removed to show the internal tray racks.
Fig. 3 is a perspective view of the thermochemical portion of the system contained within the cart.
Fig. 4 is a schematic diagram of the thermochemical portion of the current system.
Fig. 5 is a perspective view of the system seen in Fig. 1 with the front hemisphere removed to show the placement of the thermochemical portion within the cart.
Fig. 6 is an exploded view of the cart portion of the system seen in Fig. 1.
Fig. 7 is a partially transparent perspective view of the system seen in Fig. 1 showing the internal structural components of the cart.
Fig. 8 is a perspective view of the thermochemical portion of the system disposed on the base and center board components of the cart.
Fig. 9 is a partially transparent perspective view of the system seen in Fig. 1 showing the division between the hot and cold halves of the cart.
Fig. 10A is a perspective view of the circulation of air flow through the hot module of the thermochemical portion of the system.
Fig. 10B is a side view of the hot module of the thermochemical portion of the system seen in Fig. 10A.
Fig. 11A is a perspective view of the circulation of air flow through the cold module of the thermochemical portion of the system.
Fig. 11B is a side view of the cold module of the thermochemical portion of the system seen in Fig. 11A.
Fig. 12 is a perspective view of the system when the doors of the cart are in the open and locked position while the system is being recharged.
Fig. 13 is a perspective view of one of the plurality of tray racks disposed within the cart.
Fig. 14 is a side view of the tray rack seen in Fig. 13.
Fig. 15 is an end view of the tray rack seen in Fig. 13.
Fig. 16 is a perspective view of the tray rack seen in Fig. 13 after a plurality of trays have been loaded into the tray rack.
Fig. 17 is a perspective view of the thermochemical portion of the system after a tray rack has been coupled to either side of the thermochemical portion.

The disclosure and its various embodiments can now be better understood by turning to the following detailed description of the preferred embodiments which are presented as illustrated examples of the embodiments defined in the claims. It is expressly understood that the embodiments as defined by the claims may be broader than the illustrated embodiments described below.

### Detailed Description of the Preferred Embodiments

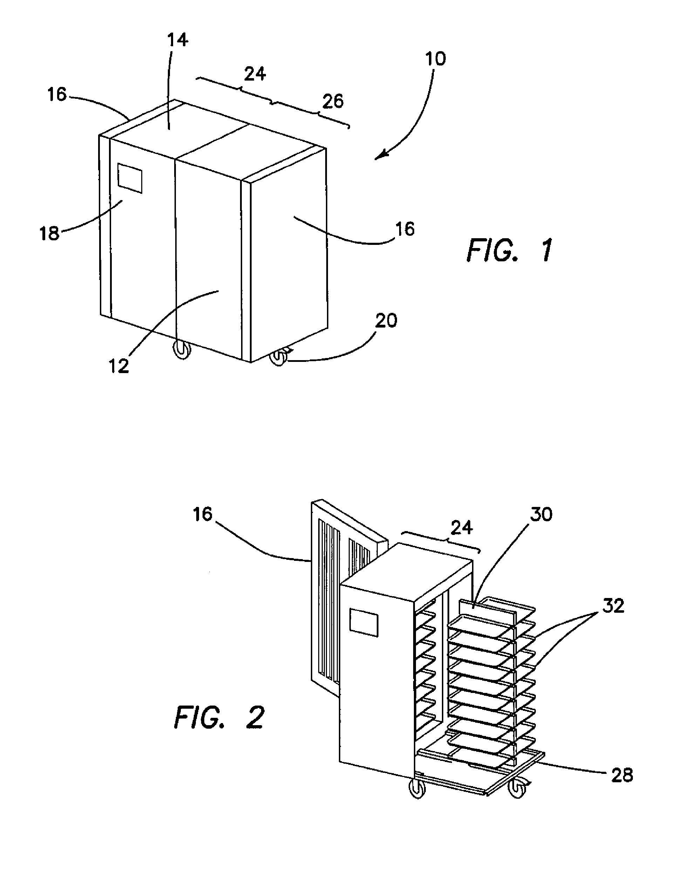

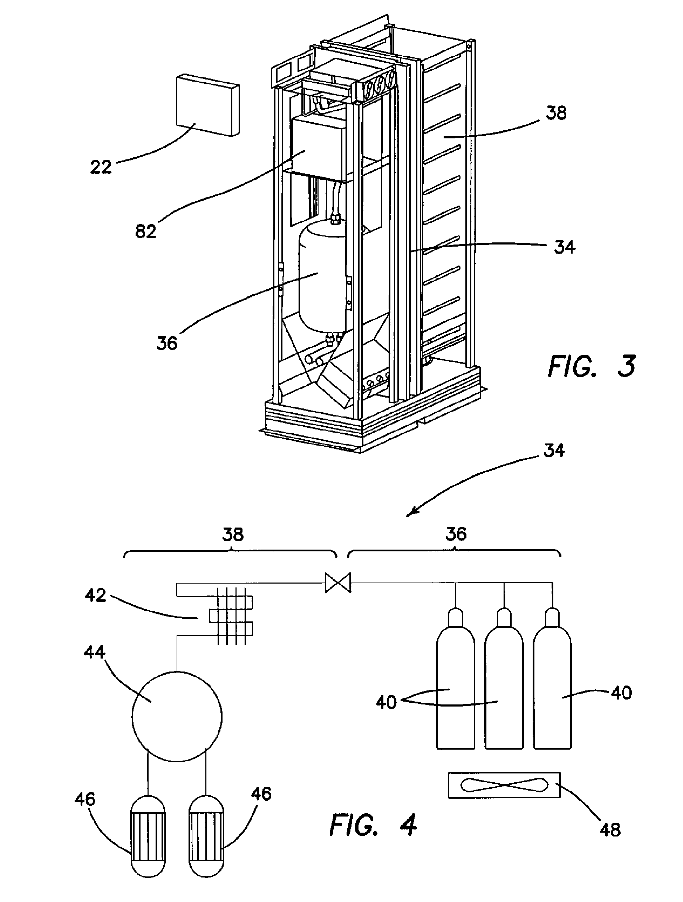

The present invention is an improved refrigeration and heating system comprising a thermochemical device 34 as seen in Fig. 3, and a mobile service cart 10 as seen in Fig. 1. The thermochemical device 34 is capable of refrigerating or cooling the ambient air due to an internal chemical process. This same chemical process also produces a significant amount of heat as a by-product which, if left alone, would normally be vented or released in to the atmosphere and become lost. However because the theremochemical device 34 is disposed at the center of the cart 10 and orientated as will be further detailed below, the heat which is generated by the cooling process is retained and utilized to provide a separate heating area within the cart 10. This allows the current system to operate as a closed loop, meaning that the cart 10 and thermochemical device 34 work in conjunction to form a self-sustaining hot and cold storage area with very little maintenance or input from a user.

Turning to Fig. 1, the cart 10 is substantially rectangular in shape and comprises a pair of side walls 12 and a top surface 14. Disposed perpendicularly between the side walls 12 at either end of the cart 10 are a pair doors 16 which are coupled to the at least one edge of the at least one side wall 12 via a plurality of hinges or other means as are well known in the art. Defined in one of the side walls 12 is a display cutout 18 used to show an electronics interface or control panel 22 of the cart 10, as seen in Fig. 3. Coupled to the bottom of the cart 10 are a plurality of casters 20 which allow the cart 10 to be mobile and maneuvered about an area of operation.

The outside structure of the cart 10 comprises two mirror image hemispheres, namely a front hemisphere 26 and a rear hemisphere 24. The hemispheres 24, 26 are coupled to one another in a back-to-back configuration on top of a frame 28, seen in Fig. 2. The side walls 12, doors 16, and top surface 14 are preferably comprised of rotationally molded plastic or plastic composites which are insulated with foam or other insulating material now known or later devised. The insulation helps prevent the hot and cold air contained within the cart 10 from escaping into the surrounding environment and lowering the overall efficiency of the cart 10.

The internal structure of the cart 10 may be seen by turning to Fig. 2 which shows the cart 10 with the front hemisphere 26 removed. Each hemisphere 24, 26 comprises a tray rack 30 disposed inside of it. Each tray rack 30 in turn comprises means for accommodating a plurality of serving trays 32 in a substantially stacked vertical configuration. Each tray rack 30 also effectively splits each serving tray 32 into two separate portions, allowing each serving tray 32 to be exposed to two different temperature regions or zones contemporaneously.

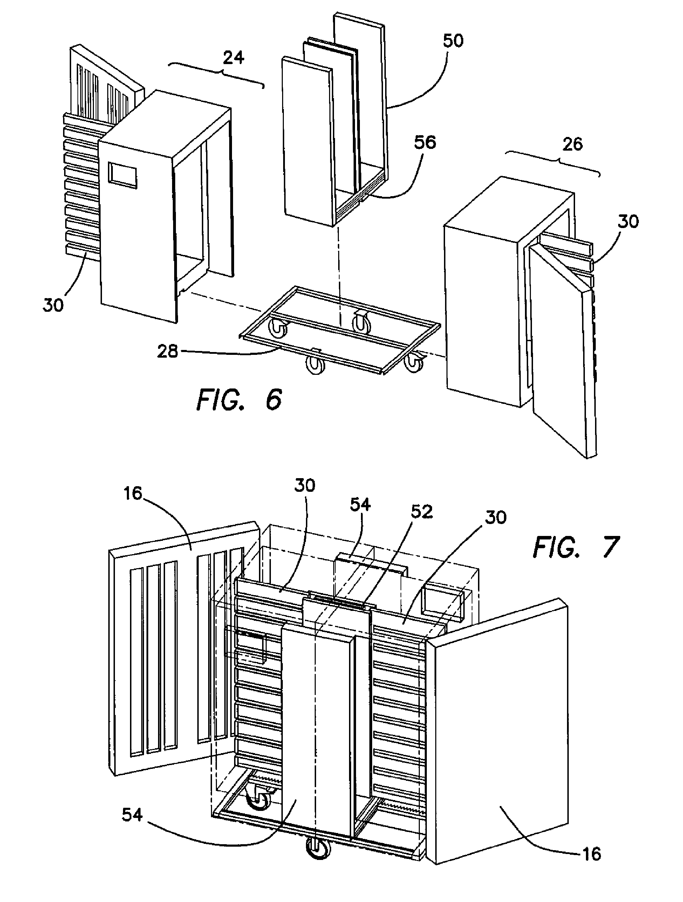

The internal structure of the cart 10 may be seen in Figs. 6 and 7. The cart 10 comprises a sandwich panel 50 which is disposed in the middle of the internal cavity of the cart 10 with the width of the sandwich panel 50 equally disposed over the front and rear hemispheres 24, 26 as best seen in the partially transparent view of Fig. 7. The sandwich panel 50 comprises a plurality of end walls 54 and a center board 52 coupled to a base 56. The center board 52 is disposed equal distant between the plurality of end walls 54 on the base 56. The sandwich panel 50 is disposed across the width of the cart 10 with the plurality of end walls 54 flush against the interior surface of each of the side walls 12.

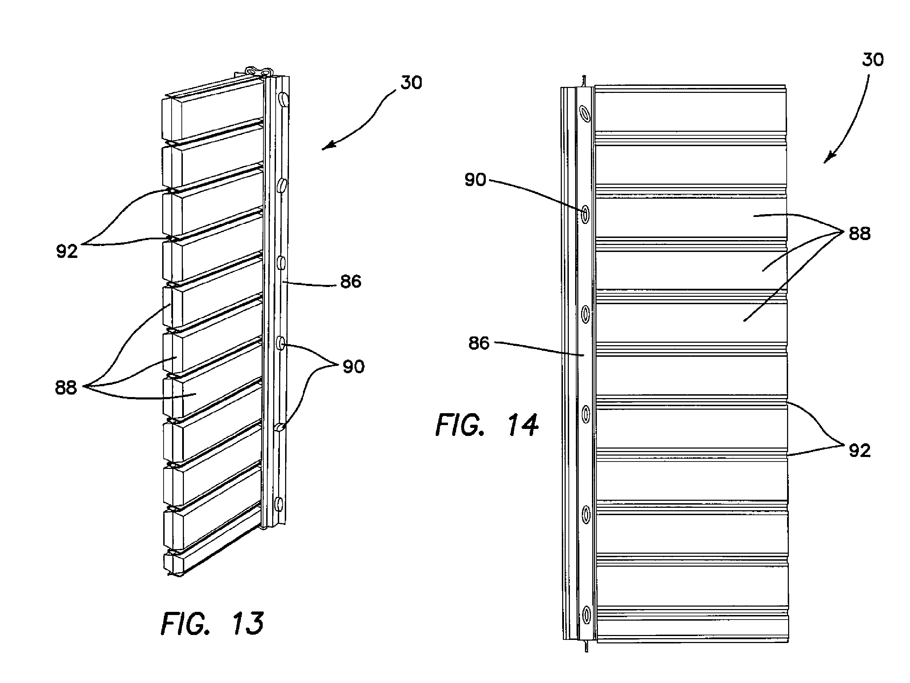

Greater detail of the tray racks 30 may be had by turning to Figs. 13-17. Each tray rack 30 comprises a center arm 86 and a plurality of tray partitions 88 coupled to the center arm 86. The center arm 86 is in turn coupled to the center board 52 via a plurality of fasteners 90 disposed along the length of the center arm 86. After the center arm 86 has been correctly placed, each fastener 90 is rotated, binding the center arm 86 to the center board 52.

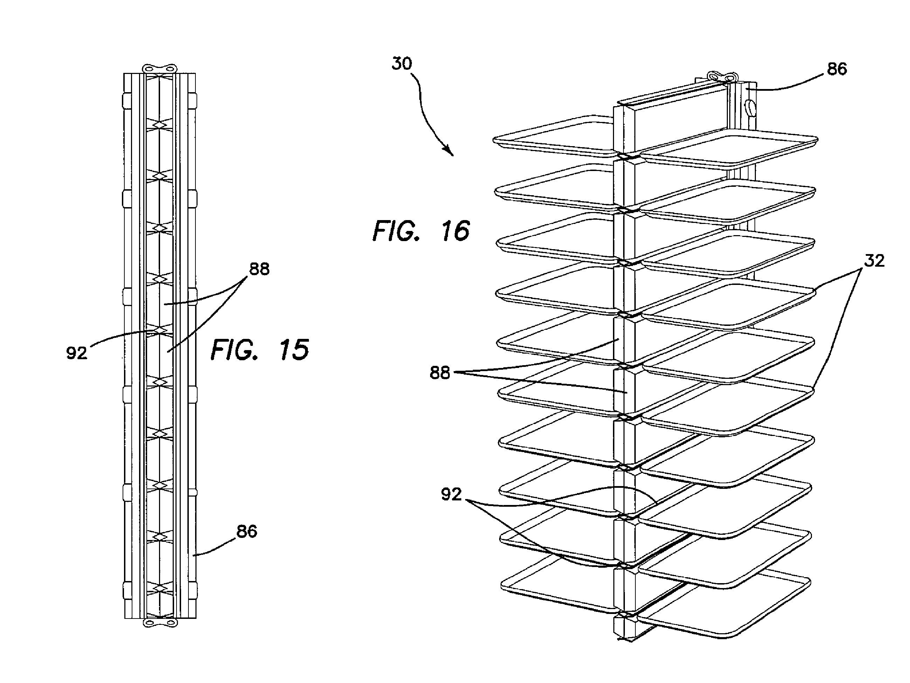

Each tray rack 30 comprises a plurality of gaskets 92 disposed between each of the tray partitions 88 as best seen in Figs. 14 and 15. Each gasket 92 is formed by two flexible seals coupled to a first tray partition 88 and two flexible seals coupled to a second tray partition 88 that is disposed directly beneath the first partition 88. The pair of seals coupled to the second tray partition 88 have a substantially "V" shaped cross section, while the first tray partition 88 disposed above it has its respective pair of seals in a substantially inverted "V" shaped cross section. The combination of the seals from the first and second tray partitions 88 therefore come together and form a substantially hollow diamond shape as best seen in Fig. 15. All the flexible seals of each gasket 92 are preferably comprised of rubber and are disposed down the entirety of the traverse length of each tray partition 88 as seen in Fig. 14. Each of the pairs of seals are diametrically opposed to one another so that continuous contact is made between each pair of seals even when no trays 32 are present within the cart 10. The gasket 92 and tray partitions 88 thus form a continuous physical and thermal barrier disposed throughout the height of the cart 10 which prevents air from one lateral half of the cart 10 from flowing into and interfering with air in the other lateral half of the cart 10.

Each gasket 92 also serves to split each tray 32 into two halves and to thermally insulate the tray 32 into a warm portion and a cold portion. To place a tray 32 into the cart 10, a user approaches the tray rack 30 and places the tray 32 longitudinally against one of the plurality of gaskets 92 disposed between two subsequent tray partitions 88. The user then pushes the tray 32 distally deeper into the tray rack 30. As the tray 32 slides distally through the gasket 92, the gasket 92 splits across its cross section, allowing the tray 32 to enter the tray rack 30. Because the gasket 92 is comprised of flexible seals in a mirror image "V" configuration, the seals above and below the tray 32 conform to the top and bottom surfaces of the tray 32 respectively, thus separating the tray 32 into two distinct portions. Because the seals of the gasket 92 conform to the surfaces of the tray 32, the air tight seal created between the lateral halves of the cart 10 remains in place which provides sufficient thermal insulation between the separate portions of the tray 32. The user slides the tray 32 through the gasket 92 until the entire width of the tray 32 is disposed between the subsequent tray partitions 88 as seen in Fig. 16. The user may then repeat the process and continue to insert trays 32 into the cart 10 until the tray rack 30 is full.

The cart 10 also comprises a thermochemical device 34, seen in general in Fig. 3 and schematically in Fig. 4. The thermochemical device 34 is a self-contained unit comprising a cold module 36 and a hot module 38. The hot module 38 comprises of one or more reactors 40 coupled to one another. The cold module 36 comprises a condenser 42, a tank 44 containing liquid ammonia or other similar refrigerant substance, and a plurality of evaporators 46. As is known in the art, thermochemical systems operate by heating and cooling a specific chemical or chemical composition and then using the heat consumed during phase transitions of the chemical composition to cool the surrounding environment. Briefly, as seen in Fig. 4, a plurality of evaporators 46 vaporize the liquid ammonia within the tank 44. The transition of the ammonia from liquid to gas absorbs heat from the surrounding environment, causing the temperature of the surrounding environment around the tank 44 to substantially decrease. The vaporized ammonia is sent to a reactor 40 within the hot module 38 of the thermochemical device 34 where it reacts with another chemical composition, typically a mixture of salts and graphite. As the ammonia gas reacts with the composition, heat is released as a byproduct of the reaction. The released heat in turn causes the temperature in the surrounding environment around the reactor 40 to substantially increase. After a period of time, all the ammonia within the tank 44 has become vaporized and has entered the reactor 40, leaving no remaining liquid ammonia within the cold module 38. The thermochemical device 34 must then be "recharged" by applying a heat source to the reactor 40. The entering heat desorbs the ammonia gas from the chemical composition. The ammonia gas is then blown out of the hot module 38 and into a condenser 42 where it is converted back into a liquid. The liquid ammonia then reenters the tank 44 where it is stored until further use of the thermochemical system is desired. This process of converting ammonia back and forth between a liquid and a gas may be repeated ad infinitum and operates as a closed system since both the ammonia and the chemical composition contained within the reactor 40 may be recycled and reused for as long as the thermochemical device 34 is in use.

In another embodiment, the tank 44 is filled with another working liquid, gas, gel, or vapor such as water, alcohols, hydrogen, carbon dioxide, or any combination thereof. Furthermore in this embodiment the reactor 40 contains other reactor materials with known absorption and desorption characteristics such as hydroxides, metal hydrides, carbonates, or alcoholates depending upon the corresponding working fluid stored in the tank 44. It will also be appreciated that other substances and materials now known or later devised appropriate for thermal storage may be used as the working fluid and reactor materials without departing from the original spirit and scope of the invention.

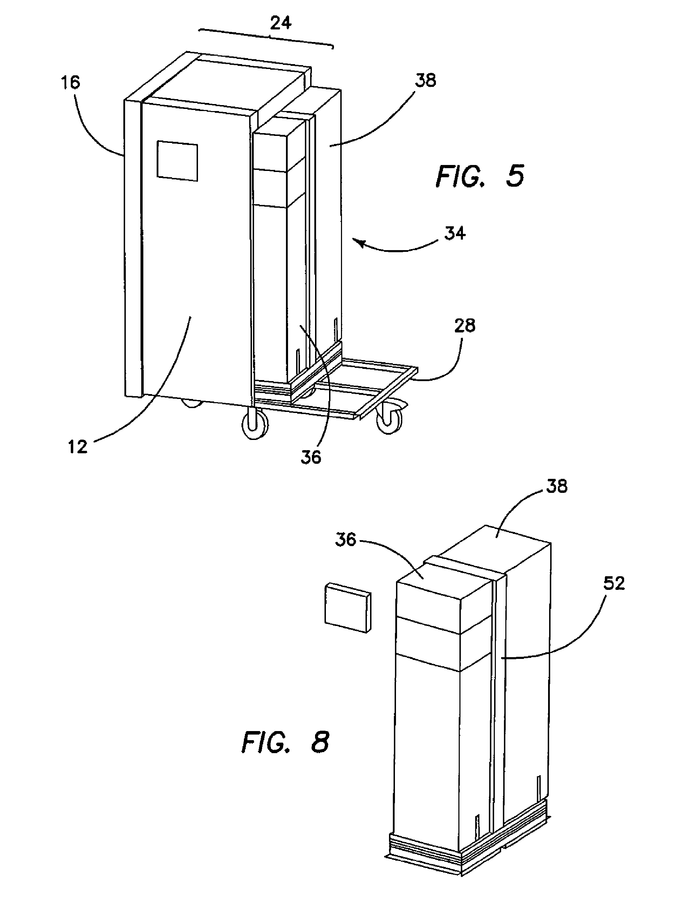

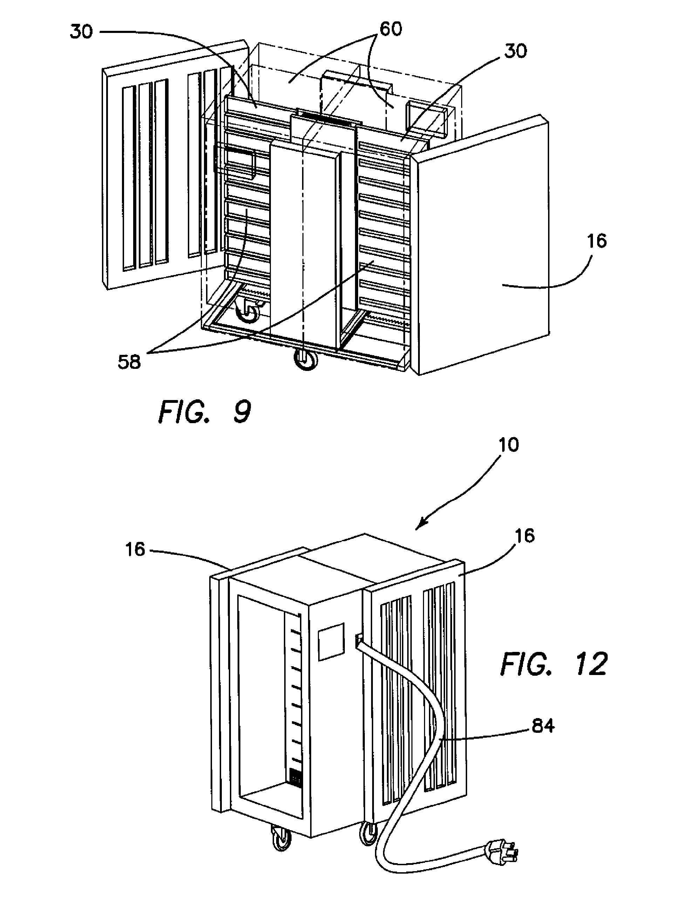

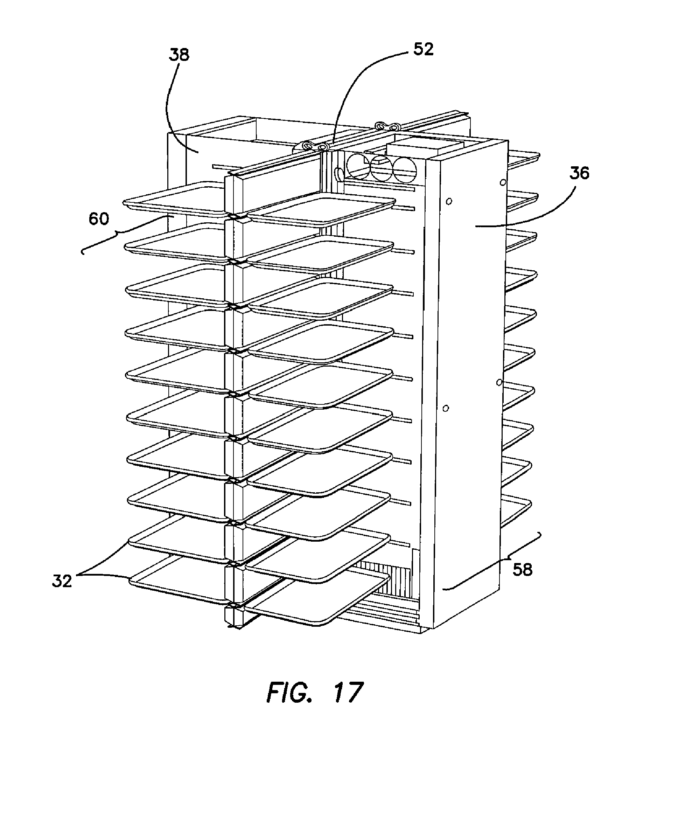

The disposition of the thermochemical device 34 in relation to the rest of the cart 10 may be seen in Figs. 5 and 8. The thermochemical device 34 is placed on the sandwich panel 50 with the hot module 38 and the cold module 36 separated by the center board 52. The thermochemical device 34 and sandwich panel 50 are then placed within the cart 10 so as to be substantially between the rear and front hemispheres 24, 26. When the tray racks 30 have been installed on both sides of the center board 52 as seen in Fig. 7, the combination of the center board 52, tray racks 30, sandwich panel 50, and side walls 12 together form a pair of chambers in each hemisphere 24, 26 that are insulated from each other and from the outside environment. Therefore when the thermochemical device 34 is present within the cart 10, the cold module 36 and hot module 38 are thermally insulated from one another, allowing each hemisphere 24, 26 to produce and maintain a respective "cold half" 58 and "hot half" 60, as best seen in Fig. 9. Further detail may be seen in Fig. 17 which shows the thermochemical device 34 with tray racks 30 mounted on either side. It can readily be seen that both tray racks 30 split the trays 32 into two portions, one portion being disposed in the cold half 58 and the other portion disposed in the hot half 60. In other words, the portions of the trays 32 that are disposed on either side of the cold module 36 thus become part of the cold half 58, while the remaining portions of the trays 32 that are disposed on either side of the hot module 38 become part of the hot half 60.

After the thermochemical device 34 has been activated, a user may open one of the doors 16 of the cart 10 and place a serving tray 32 within the tray rack 30 as disclosed above. Food stuffs may then be placed on the opposing halves of the serving tray 32 according to their specific requirements. For example, ice cream or items requiring cold storage are placed on the portion of the serving tray 32 disposed within the cold half of the hemisphere 24, 26, while soup or items requiring hot storage are placed on the portion of the serving tray 32 disposed within the hot half of the hemisphere 24, 26. When the door 16 is closed, the thermochemical device 34 maintains the cold half 58 at a sufficiently low temperature and the hot half 60 at a sufficiently high temperature within each of the two hemispheres 24, 26 for as long as the thermochemical device 34 remains active.

Because of the mirror-image configuration of the cart 10 and the central disposition of the thermochemical device 34, the cold halves 58 and hot halves 60 of each of the hemispheres 24, 26 are aligned with one another. In other words, as seen in Fig. 9, the cart 10 is split along its longitudinal axis into two lateral halves as defined by the tray racks 30 and center board 52, the hot half 60 for each hemisphere 24, 26 being disposed in the same lateral half of the cart 10, the cold half 58 for each hemisphere 24, 26 being disposed in the opposing lateral half. A user facing the front hemisphere 26 will therefore have the cold half 58 of the cart 10 on their left hand side and the hot half 60 on their right hand side. Similarly, a user facing the rear hemisphere 24 will in turn see the hot half 60 on their left hand side and the cold half 58 on their right hand side.

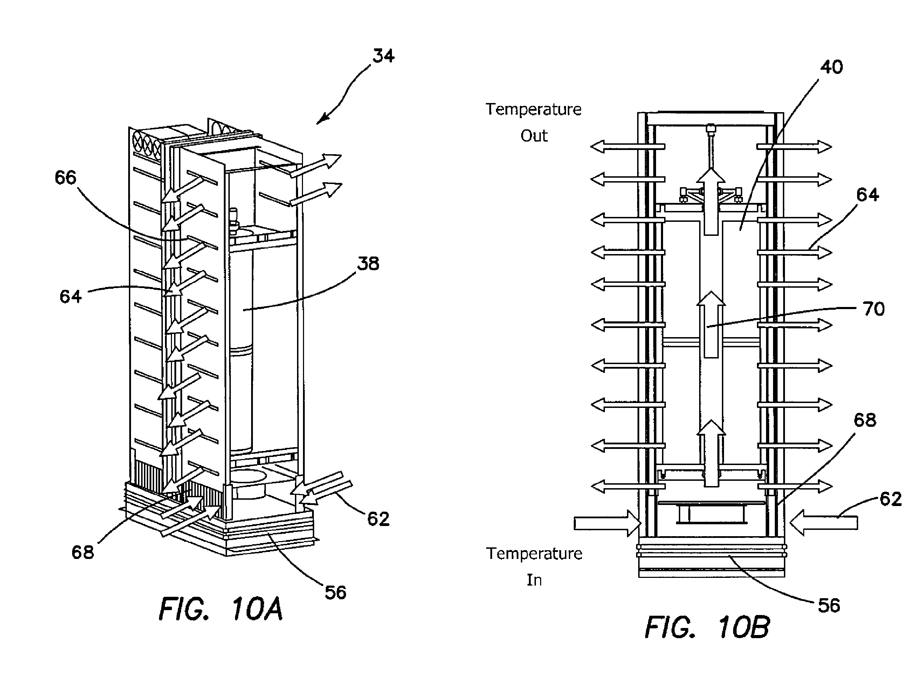

The closed loop flow of air through the hot halves 60 of the cart 10 may be seen in Figs. 10A and 10B. Air is brought into the hot module 38 from the hot halves 60 of both the rear hemisphere 24 and front hemisphere 26 via an intake 68 located on either side of the hot module 38 in the direction indicated by arrow 62. The air then flows over the reactors 40 of the hot module 38 in direction of arrow 70 with the help of a fan 48 or other fluid moving device. As the air passes over of the reactors 40, it quickly heats to temperatures from room temperature to over 70°C. As the air traverses vertically up the hot module 38, it flows out of a plurality of vents 66 defined along the height of the hot module 38 in the direction indicated by arrows 64. The heated air exits the hot module 38 in opposing directions into the respective hot halves 60 of the rear and front hemispheres 24, 26. As the air cools and flows against the doors 16 and side walls 12 of the cart 10, the air is recirculated within each hemisphere 24, 26 by being brought back into the hot module 38 through the intakes 68. It is in this fashion therefore that ambient air trapped within the hot halves 60 of the cart 10 continuously gets recycled and reused during the time the cart 10 is activated, thus making the air flow within the hot halves 60 of the cart a closed loop system.

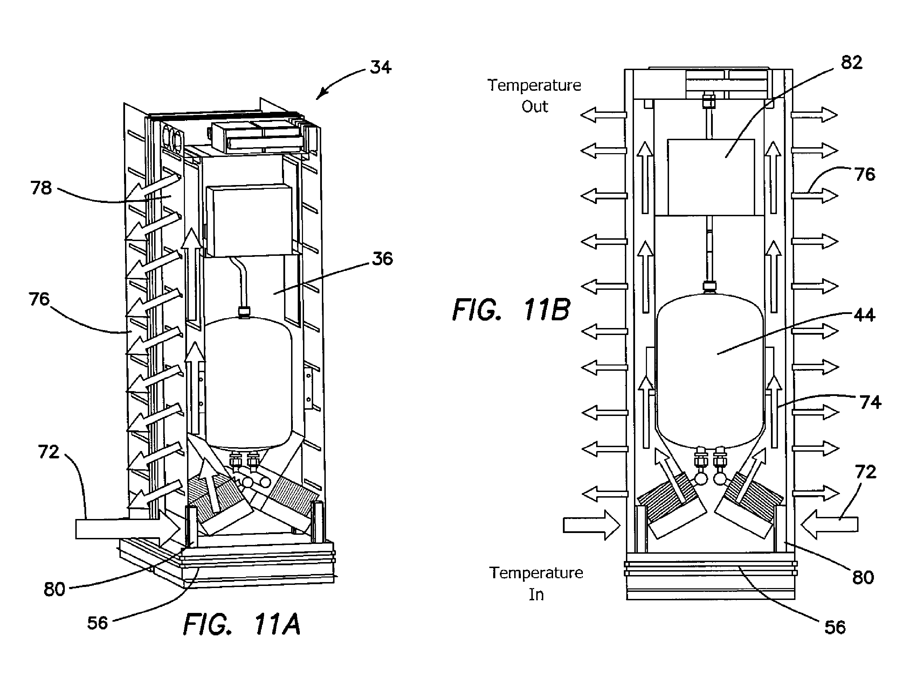

The closed loop flow of air through the cold halves 58 of the cart 10 may be seen in Figs. 11A and 11B. Air is brought into the cold module 36 from the cold halves 58 of both the rear hemisphere 24 and front hemisphere 26 via an intake 80 located on either side of the cold module 36 in the direction indicated by arrow 72. The air then flows over the tank 44 of the cold module 36 in direction of arrow 74 with the help of a fan or other fluid moving device. As the air passes over of the tank 44, it quickly cools the air to a temperature of approximately 3°C. As the air traverses vertically up the cold module 36, it flows out of a plurality of vents 78 defined along the height of the cold module 36 in the direction indicated by arrows 76. The cooled air exits the cold module 36 in opposing directions into the respective cold halves 58 of the rear and front hemispheres 24, 26. As the air sinks and flows against the doors 16 and side walls 12 of the cart 10, the air is re-circulated within each hemisphere 24, 26 by being brought back into the cold module 36 through the intakes 80. It is in this fashion therefore that ambient air trapped within the cold halves 58 of the cart 10 continuously gets recycled and reused during the time the cart 10 is activated, thus making the air flow within the cold halves 58 of the cart a closed loop system. It is important to note that because of the tray racks 30 and center board 52, the hot halves 60 and the cold halves 58 of the cart 10 are thermally insulated from one another, allowing the closed loop of air flow within the hot halves 60 to operate independently from that of the closed loop of air flow within the cold halves 58. In one embodiment however, a vent or plurality of vents may be provided between the cold halves 58 and the hot halves 60 of the cart 10 so as to equalize the temperature throughout the cart 10, if needed.

Operation of the system is done through the control panel 22 which in turn is coupled to a power source 82 of the thermochemical device 34. The power source 82 is preferably a rechargeable battery or plurality of batteries, or any other suitable rechargeable power source now known or later devised. A user controls the operation of the cart 10 through manipulation of the control panel 22 and the internal electronic components contained therein.

For example, after a plurality of trays 32 have been inserted into the cart 10 as disclosed above, the cart 10 may be activated by closing the doors 16 and pressing a "START" button disposed on the control panel 22. The system will then begin to operate according to a pre-programmed set of instructions contained on an internal memory contained within the control panel 22. For example, after activation, the thermochemical device 34 will begin to operate at maximum power for a pre-determined amount of time, until all the liquid ammonia has been depleted from the tank 44, or until the user presses a "STOP" button disposed on the control panel 22. In other embodiments, the thermochemical device 34 will cease operation after a user has entered the proper command remotely, such as over the internet or WiFi connection. Furthermore in another embodiment, each time one of the doors 16 of the cart 10 is opened, air flow within each hemisphere 24, 26 is temporarily stopped, thereby increasing the overall efficiency of the cart 10. After the doors 16 have once again been shut, air flow within each hemisphere 24, 26 resumes.

After the thermochemcial device 34 within the cart 10 has fully performed, specifically after all the liquid ammonia has reacted with the salts contained within the reactors 40, the thermochemical device 34 may be recharged and then restarted. In order to recharge the thermochemical device 34, the doors 16 are first opened and set into a locked position as seen in Fig. 12 so that they do not accidently close again before the recharging process terminates. A cable 84 with a standard plug is coupled to the cart 10, with its opposing end inserted into a standard 110V wall socket or other outside source. The user then presses a "RECHARGE" button disposed on the control panel 22. Power supplied from the cable 84 recharges the power source 82 and applies heat to the reactors 40, causing desorption of the ammonia gas from the salts contained therein. The ammonia gas is then continuously condensed back into a liquid within the tank 44 as disclosed above until the thermochemical device 34 is returned to the condition it was in before the system was initially activated, or alternatively, after a pre-determined time has elapsed since recharging began. Since the thermochemical device 34 contained within the cart 10 is self-sufficient, the process of activation and recharging may be repeated ad infinitum. It should also be noted that when the thermochemical device 34 is undergoing the recharging process, the outside power source which the cable 84 is coupled to may be any power source now known or later devised such as but not limited to solar panels, generators, or the electrical outlet of a vehicle.

The control panel 22 also comprises means for performing a plurality of user related functions as well. For example, the control panel 22 comprises a memory card slot, a USB port, or Ethernet socket which allows supplemental operational instructions contained on a computer readable medium to be supplied to the system, as well as allowing for remote diagnostics of the thermochemical device 34. The control panel 22 also comprises an alarm system for alerting the user that a specific event or condition has taken place within the thermochemical device 34 or within the cart 10 itself. The alarm system comprises an audio alarm which notifies a user, in addition to a visual alarm such as flashing light, siren, or textual message displayed on a display screen within the control panel 22. The alarm system may be set to activate when any number of pre-determined events have occurred including but not limited to detection of the doors 16 being opened during activation of the thermochemical device 34, detection of doors 16 being ajar during recharging of the thermochemical device 34, an anomaly during the activation or recharging of the thermochemical device 34, notification of completed recharge cycle, or detection of coupling/uncoupling of the cable 84. Other functions of the control panel 22 not explicitly described here that may be well known to one skilled in the relevant art are also contemplated to be well within the spirit and scope of the original invention.

Many alterations and modifications may be made by those having ordinary skill in the art without departing from the spirit and scope of the embodiments. Therefore, it must be understood that the illustrated embodiment has been set forth only for the purposes of example and that it should not be taken as limiting the embodiments as defined by the following embodiments and its various embodiments.

Therefore, it must be understood that the illustrated embodiment has been set forth only for the purposes of example and that it should not be taken as limiting the embodiments as defined by the following claims. For example, notwithstanding the fact that the elements of a claim are set forth below in a certain combination, it must be expressly understood that the embodiments includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the embodiments is explicitly contemplated as within the scope of the embodiments.

The words used in this specification to describe the various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what essentially incorporates the essential idea of the embodiments.

## Claims

1. A mobile system for storing and maintaining food stuffs at a first temperature and a second temperature comprising:
a cart comprising a front hemisphere and a rear hemisphere; and
a thermochemical device disposed within the cart,
wherein the thermochemical device is evenly distributed between the front and
rear hemispheres, and
wherein heat produced by thermochemical device is retained within the cart.

2. The system of claim 1 where the front hemisphere and the rear hemisphere of the cart each comprise two thermally insulated halves separated by a tray rack.

3. The system of claim 2 where the tray rack comprises:
a tray arm;
a plurality of tray partitions coupled to the tray arm in a vertical configuration; and
a gasket disposed between each of the vertically configured tray partitions.

4. The system of claim 3 where each gasket is comprised of at least two seals coupled to a first of the plurality of tray partitions and at least two seals coupled to a second of the plurality of tray partitions, the second tray partition being disposed directly beneath the first tray partition.

5. The system of claim 2 where the thermochemical device comprises a hot module and a cold module, wherein the hot module is in thermal contact with at least one thermally insulated half of each hemisphere, and wherein the cold module is in thermal contact with at least one other thermally insulated half in each hemisphere.

6. The system of claim 5 wherein the thermally insulated halves of the hemispheres in thermal contact with the hot module are diametrically opposed to one another.

7. The system of claim 5 wherein the thermally insulated halves of the hemispheres in thermal contact with the cold module are diametrically opposed to one another.

8. The system of claim 6 further comprising means for forming a closed loop flow of air through the hot module and the insulated halves of the hemispheres in thermal contact with the hot module.

9. The system of claim 7 further comprising means for forming a closed loop flow of air through the cold module and the insulated halves of the hemispheres in thermal contact with the cold module.

10. The system of claim 1 further comprising means for recharging the thermochemical device disposed in the cart.

11. The system of claim 1 where the thermochemical device comprises a working fluid and a reactor material,
wherein the working fluid comprises: liquid ammonia, water, alcohol, hydrogen, carbon dioxide, or any combination thereof, and
wherein the reactor material comprises: salts, hydroxides, metal hydrides, carbonates, alcoholates, or any combination thereof.

12. A method for storing and maintaining food stuffs at a first temperature and a second temperature comprising:
cooling a first longitudinal half of a cart with a first closed loop of air flow;
heating a second longitudinal half of the cart with a second closed loop of air flow;
thermally insulating the first and second longitudinal halves of the cart from each other;
disposing a plurality of trays into the cart; and
thermally insulating a first portion of each of the plurality of trays from a second portion of each of the plurality of trays.

13. The method of claim 12 where cooling a first longitudinal half of a cart with a first closed loop of air flow comprises passing the air flow over a means for performing an endothermic reaction disposed in the first longitudinal half of the cart.

14. The method of claim 13 where heating a second longitudinal half of the cart with a second closed loop of air flow comprises passing the air flow over a means for containing an exothermic reaction produced by the waste product produced by the means for performing the endothermic reaction disposed in the first longitudinal half of the cart.

15. The method of claim 12 where disposing a plurality of trays into the cart comprises disposing the plurality of trays into in a tray rack, wherein the tray rack is disposed between the first and second longitudinal halves of the cart.

16. The method of claim 15 where thermally insulating a first portion of each of the plurality of trays from a second portion of each of the plurality of trays comprises dividing each tray into first and second portions by inserting each tray into a gasket defined in the tray rack.

17. The method of claim 12 further comprising recharging a thermochemical device disposed in the cart.

18. A method for operating a system for storing and maintaining food stuffs at a first temperature and a second temperature comprising:
activating a thermochemical device disposed within a cart;
operating the thermochemical device according to a predetermined set of programmable instructions;
deactivating the thermochemical device; and
recharging the thermochemical device.

19. The method of claim 18 where operating the thermochemical device according to a predetermined set of programmable instructions comprises:
operating the thermochemical device for a predetermined amount of time; or
operating the thermochemical device until a chemical supply contained within the thermochemical device has been depleted.

20. The method of claim 18 further comprising detecting when one or more doors disposed on the cart are in the open position.

21. The method of claim 20 further comprising activating an alarm when a defect has been detected in the thermochemical device or for when the doors disposed on the cart have been detected in the open position.

22. A mobile cart for maintaining food stuffs at a first temperature within a first portion and at a second temperature within a second portion comprising:
a tank, a condenser, and at least one evaporator within the first portion;
at least one reactor and a fan within the second portion;
thermal insulation between the first portion and the second portion; and
a rack for accommodating a plurality of serving trays, wherein the rack is configured to maintain each of the plurality of serving trays simultaneously within the first and second portions.
